(19) **Europäisches Patentamt**

**European Patent Office**

**Office européen des brevets**

(11) Veröffentlichungsnummer: **0 078 428**
**B1**

(12) **EUROPÄISCHE PATENTSCHRIFT**

(45) Veröffentlichungstag der Patentschrift:
**10.04.85**

(21) Anmeldenummer: **82109522.1**

(22) Anmeldetag: **14.10.82**

(51) Int. Cl.⁴: **G 21 C 3/58**, G 21 C 21/02

(54) Verfahren zum Herstellen von oxidischen Kernbrennstoffsinterkörpern.

(30) Priorität: 26.10.81 DE 3142447

(43) Veröffentlichungstag der Anmeldung:
11.05.83 Patentblatt 83/19

(45) Bekanntmachung des Hinweises auf die Patenterteilung:
10.04.85 Patentblatt 85/15

(84) Benannte Vertragsstaaten:
**BE FR GB IT SE**

(56) Entgegenhaltungen:
**DE - A - 1 939 610**
**DE - A - 2 855 166**
**GB - A - 1 182 080**
**GB - A - 2 020 260**
**US - A - 4 052 330**

(73) Patentinhaber: **KRAFTWERK UNION AKTIENGESELLSCHAFT, Wiesenstrasse 35, D-4330 Mülheim (Ruhr) (DE)**
Patentinhaber: **REAKTOR-BRENNELEMENT UNION GmbH, Postfach 11 00 60, D-6450 Hanau 11 (DE)**

(72) Erfinder: **Assmann, Helmut, Dr. Dipl.-Phys., Schwabachstrasse 13, D-8524 Dormitz (DE)**
Erfinder: **Maier, Georg, An der Bieg 15, D-8522 Herzogenaurach (DE)**
Erfinder: **Dichtjar, Gerhard, Rothenbergerstrasse 17, D-6456 Langenselbold (DE)**
Erfinder: **Mathieu, Viktor, Bergstrasse 32, D-6451 Neuberg (DE)**
Erfinder: **Dörr, Wolfgang, Dr. Dipl.-Phys., Von-Weber-Strasse 51a, D-8522 Herzogenaurach (DE)**
Erfinder: **Peehs, Martin, Dr. Dipl.-Phys., Falkenstrasse 3, D-8521 Bubenreuth (DE)**

(74) Vertreter: **Mehl, Ernst, Dipl.-Ing. et al, Postfach 22 01 76, D-8000 München 22 (DE)**

## Beschreibung

Die Erfindung betrifft ein Verfahren zum Herstellen von oxidischen Kernbrennstoffsinterkörpern durch eine Wärmebehandlung von aus $UO_2$-Ausgangspulver oder aus einer Mischung aus $UO_2$- und $PuO_2$-Ausgangspulver gewonnenen Presslingen bei einer Behandlungstemperatur im Bereich von 1000 bis 1400° C zunächst in oxidierend und anschliessend in reduzierend wirkender Gasatmosphäre.

Ein derartiges Verfahren ist aus der DE-OS Nr. 2855166 bekannt. Die Presslinge werden bei diesem Verfahren durch Kompaktieren von Kernbrennstoffpulver gewonnen, welches zur Einstellung der Mikrostruktur mit kornwachstumsfördernd wirkenden Sinterzusätzen wie $U_3O_8$ versetzt und vermischt ist. Als oxidierend wirkende Gasatmosphäre wird beispielsweise technisch reines $CO_2$ verwendet. Das bekannte Verfahren führt zu oxidischen Kernbrennstoffsinterkörpern mit einer gleichmässigen feinkörnigen Kernbrennstoffoxidmatrix in der Mikrostruktur, in der grobe Inseln nur an den ursprünglich von den kornwachstumsfördernden Sinterzusätzen eingenommenen Stellen eingebettet sind. Während der Kernspaltvorgänge in den oxidischen Kernbrennstoffsinterkörpern in einem in Betrieb befindlichen Kernreaktor setzen die nach dem bekannten Verfahren gewonnene Kernbrennstoffsinterkörper weniger gasförmige oder leichtflüchtige Kernspaltprodukte frei und sind einer geringeren Nachverdichtung unterworfen als Kernbrennstoffsinterkörper mit absolut gleichmässiger Mikrostruktur sehr kleiner Korngrösse. Brennstäbe, die mit nach dem bekannten Verfahren gewonnenen Kernbrennstoffsinterkörpern gefüllt sind, entwickeln also einen kleineren Innendruck im Hüllrohr als Brennstäbe, die mit oxidischen Kernbrennstoffsinterkörpern gefüllt sind, welche eine absolut gleichmässige Mikrostruktur dieser kleinen Korngrösse haben.

Der Erfindung liegt die Aufgabe zugrunde, das bekannte Verfahren weiterzubilden und zu erreichen, das oxidische Kernbrennstoffsinterkörper in einem im Betrieb befindlichen Kernreaktor noch weniger gasförmige und leichtflüchtige Kernspaltprodukte freisetzen.

Zur Lösung dieser Aufgabe ist das eingangs erwähnte Verfahren erfindungsgemäss dadurch gekennzeichnet, dass das Sauerstoffpotential der oxidierend wirkenden Gasatmosphäre in einem solchen Bereich gehalten wird, in dem in den Presslingen während des Erwärmens auf die Behandlungstemperatur in dieser oxidierend wirkenden Gasatmosphäre eine kristallographisch nachweisbare $U_4O_9$- bzw. $(U, Pu)_4O_9$-Kristallphase erzeugt wird.

Der kristallographische Nachweis der $U_4O_9$- bzw. $(U, Pu)_4O_9$-Phase kann günstigerweise durch Bestimmen der Gitterkonstante in den behandelten Presslingen mit Hilfe von Röntgendiffraktometrie (vgl. „Solid State Communications", vol. 5, S. 349-352, 1967) oder von Neutronendiffraktometrie (vgl. „Le Journal de Physique", Bd. 25, S. 431-439, 1964) erfolgen.

Das Sauerstoffpotential ist durch die Beziehung $\triangle GO_2 = RT \cdot \ln PO_2$ mit R = allgemeine Gaskonstante, T = absolute Temperatur und $PO_2$ = Sauerstoffpartialdruck in der oxidierend wirkenden Gasatmosphäre definiert.

Die durch die Erfindung gewonnenen oxidischen Kernbrennstoffsinterkörper weisen eine Mikrostruktur mit gleichmässig verteiltem groben Korn auf, welches stabil gegen Wachstum bei Betriebstemperatur in einem Kernreaktor ist. Da keine Korngrenzenwanderung mehr auftritt, können gasförmige oder leichtflüchtige Kernspaltprodukte (z. B. Xe, Jod) nicht durch wandernde Korngrenzen aus der Kernbrennstoffoxidmatrix nach aussen ausgeschwemmt werden und einen Überdruck im Hüllrohr des Brennstabes aufbauen, in dem sich die oxidischen Kernbrennstoffsinterkörper im Kernreaktor befinden. Da die Presslinge keine kornwachstumsfördernd wirkenden Sinterzusätze zu enthalten brauchen, kann eine Beeinflussung der Dichte der Kernbrennstoffsinterkörper durch solche Zusätze vermieden werden.

Zur Überführung der Presslinge in die $U_4O_9$- bzw. $(U, Pu)_4O_9$-Kristallphase ist es günstig, wenn diese Presslinge während des Erwärmens auf die Behandlungstemperatur 15 min bis 2 h lang in der oxidierend wirkenden Gasatmosphäre auf einer Temperatur im Bereich von 400 bis 600° C gehalten werden.

Grösse und Verteilung des Grobkorns in den oxidischen Kernbrennstoffsinterkörpern kann dadurch gesteuert werden, dass in vorteilhafter Weise Presslinge verwendet werden, die eine Zusatzsubstanz beigemengt enthalten, die sich bei einer Temperatur im Bereich bis zur Behandlungstemperatur unter Ausbildung reduzierend wirkender Zersetzungsprodukte thermisch zersetzt. Enthalten die Presslinge nur stellenweise, z. B. in einer Schicht an der Oberfläche, diese Zusatzsubstanz beigemengt, so sind die aus ihnen gewonnenen oxidischen Kernbrennstoffsinterkörper an diesen Stellen feinkörnig, sonst aber gleichmässig grobkörnig.

Günstig ist es, Presslinge zu verwenden, die Molybdänsulfid, Zinkstearat, Polyvinylalkohol und/oder Kohlenwasserstoffe als Zusatzsubstanz beigemengt enthalten.

Als oxidierende Gasatmosphäre kann günstigerweise ein Gemisch aus $CO_2$ und Luft im Volumenverhältnis im Bereich von $10^5:1$ bis $10^2:1$, vorzugsweise von $10^3:1$, ein Gemisch von $CO_2$ und $O_2$ im Volumenverhältnis im Bereich von $5 \cdot 10^5:1$ bis 500:1, vorzugsweise von 5000:1, oder ein Gemisch von $CO_2$ und Inertgas, beispielsweise ein Edelgas oder Stickstoff, im Volumenverhältnis im Bereich von $1:10^4$ bis 1:10, vorzugsweise von 1:100, verwendet werden.

Die Ausbildung einer gleichmässig verteilten, groben Kornstruktur in den oxidischen Kernbrennstoffsinterkörpern wird begünstigt, wenn Presslinge mit $UO_2$-Ausgangspulver verwendet werden, dessen spezifische Oberfläche im Bereich von 3 m²/g bis 50 m²/g liegt. Vorteilhaft ist es, wenn die spezifische Oberfläche dieses $UO_2$-Ausgangspulvers im Bereich von 4 m²/g bis 7 m²/g liegt.

Ferner ist es günstig, wenn Presslinge verwendet werden mit UO$_2$-Ausgangspulver, dessen mittlere Kristallitgrösse kleiner als 0,5 µm ist. Vorteilhafterweise liegt diese mittlere Kristallitgrösse im Bereich von 0,2 bis 0,01 µm.

Die Erfindung und ihre Vorteile seien anhand eines Vergleichsbeispiels und zweier Ausführungsbeispiele näher erläutert.

In einem Vergleichsbeispiel wurde ein aus UO$_2$-Pulver mit verhältnismässig grosser spezifischer Oberfläche von 6 m²/g und mit einer mittleren Kristallitgrösse von ca. 0,075 µm kompaktierter Pressling verwendet. Das benutzte UO$_2$-Pulver kann nach dem sogenannten AUC-Prozess gewonnen werden, der im „Gmelin Handbuch der Anorganischen Chemie", „Uran", Ergänzungsband A3, 1981, S. 101 bis 104, beschrieben ist. Der kompaktierte Pressling wurde in einer aus einem Gemisch aus CO$_2$ und CO im Volumenverhältnis 10:1 bestehenden Sinteratmosphäre etwa bei 1 bar bei 1100° C 1 h lang gesintert. Anschliessend wurde der aus dem Pressling entstandene Sinterkörper unter Beibehaltung seiner Temperatur in eine Wasserstoffatmosphäre von etwa 1 bar übergeführt und dort 15 min lang bei einer Reduktionstemperatur von ebenfalls 1100° C reduziert. Nach dem Abkühlen besass der aus dem Pressling gewonnene oxidische Kernbrennstoffsinterkörper eine monomodale Kornverteilung mit Korngrösse von 2 µm.

Als erstes Ausführungsbeispiel wurde ein aus dem gleichen UO$_2$-Pulver wie beim Vergleichsbeispiel kompaktierter Pressling in einer aus einem Gemisch aus CO$_2$ und Luft im Volumenverhältnis von 100:1 bestehenden Sinteratmosphäre von etwa 1 bar zunächst auf 500° C erhitzt und auf dieser Temperatur etwa 30 min lang gehalten. Während dieser Zeit wird das UO$_2$ des Presslings vollständig in die reine U$_4$O$_9$-Kristallphase übergeführt. Sodann wurde der Pressling weiter in der gleichen Sinteratmosphäre auf eine Sintertemperatur von 1200° C erhitzt und 1 h lang gesintert. Anschliessend wurde der aus diesem Pressling entstandene Sinterkörper unter Beibehaltung seiner Temperatur in eine Wasserstoffatmosphäre von etwa 1 bar übergeführt und bei einer Reduktionstemperatur von ebenfalls 1200° C während 15 min reduziert. Nach dem Abkühlen hatte der aus dem Pressling gewonnene oxidische Kernbrennstoffsinterkörper ebenfalls eine monomodale Kornverteilung, die Korngrösse betrug 25 µm.

In einem weiteren Ausführungsbeispiel wurde ein aus dem gleichen UO$_2$-Pulver wie beim Vergleichsbeispiel kompaktierter Pressling in einer Oberflächenschicht von 200 µm Dicke mit Öl als Kohlenwasserstoff getränkt. Sodann wurde dieser Pressling in einer aus einem Gemisch von CO$_2$ und Luft im Volumenverhältnis von 500:1 bestehenden Sinteratmosphäre von etwa 1 bar auf eine Sintertemperatur von 1200° C erhitzt und auf dieser Temperatur 1 h lang gesintert. Sodann wurde der aus dem Pressling entstandene Sinterkörper unter Beibehaltung seiner Temperatur in eine Wasserstoffatmosphäre von etwa 1 bar überführt und 15 min lang bei einer Reduktionstemperatur von ebenfalls 1200° C reduziert. Nach dem Abkühlen ergaben sich sowohl in der ursprünglich mit Öl getränkten Oberflächenschicht als auch im Kern des aus dem Pressling gewonnenen oxidischen Kernbrennstoffsinterkörpers eine monomodale Kornverteilung, die Korngrösse betrug jedoch in der Oberflächenschicht 3 µm, während sie im Kern 23 µm war.

Der nach dem letztgenannten Ausführungsbeispiel gewonnene oxidische Kernbrennstoffsinterkörper hat in der feinkörnigen Oberflächenschicht eine bessere Kriechfähigkeit. Dies verhindert in vorteilhafterweise die mechanische Wechselwirkung zwischen dem Kernbrennsinterkörper und dem Hüllrohr des Brennstabes, in dem sich der Kernbrennstoffsinterkörper während des Betriebes im Kernreaktor befindet. Unabhängig davon verringert zugleich das Grobkorn im Kern des Kernbrennstoffsinterkörpers das Freiwerden von gasförmigen und leichtflüchtigen Kernspaltprodukten.

## Patentansprüche

1. Verfahren zum Herstellen von oxidischen Kernbrennstoffsinterkörpern durch eine Wärmebehandlung von aus UO$_2$-Ausgangspulver oder aus einer Mischung aus UO$_2$- und PuO$_2$-Ausgangspulver gewonnenen Presslingen bei einer Behandlungstemperatur im Bereich von 1000 bis 1400° C zunächst in oxidierend und anschliessend in reduzierend wirkender Gasatmosphäre, dadurch gekennzeichnet, dass das Sauerstoffpotential der oxidierend wirkenden Gasatmosphäre in einem solchen Bereich gehalten wird, in dem in den Presslingen während des Erwärmens auf die Behandlungstemperatur in dieser oxidierend wirkenden Gasatmosphäre eine kristallographisch nachweisbare U$_4$O$_9$- bzw. (U, Pu)$_4$O$_9$-Kristallphase erzeugt wird.

2. Verfahren nach Anspruch 1, dadurch gekennzeichnet, dass die Presslinge während des Erwärmens auf die Behandlungstemperatur 15 min bis 2 h lang in der oxidierend wirkenden Gasatmosphäre auf einer Temperatur im Bereich von 400 bis 600° C gehalten werden.

3. Verfahren nach Anspruch 1, dadurch gekennzeichnet, dass Presslinge verwendet werden, die eine Zusatzsubstanz beigemengt enthalten, die sich bei einer Temperatur im Bereich bis zur Behandlungstemperatur unter Ausbildung reduzierend wirkender Zersetzungsprodukte thermisch zersetzt.

4. Verfahren nach Anspruch 3, dadurch gekennzeichnet, dass Presslinge verwendet werden, die Molybdänsulfid, Zinkstearat, Polyvinylalkohol und/oder Kohlenwasserstoffe als Zusatzsubstanz beigemengt enthalten.

5. Verfahren nach Anspruch 3, dadurch gekennzeichnet, dass Presslinge verwendet werden, die die Zusatzsubstanz nur in einer Schicht an der Oberfläche beigemengt enthalten.

6. Verfahren nach Anspruch 1, dadurch gekennzeichnet, dass als oxidierend wirkende Gas-

atmosphäre ein Gemisch von $CO_5$ und Luft im Volumenverhältnis im Bereich von $10^5:1$ bis $10^2:1$, vorzugsweise von $10^3:1$, verwendet wird.

7. Verfahren nach Anspruch 1, dadurch gekennzeichnet, dass als oxidierend wirkende Gasatmosphäre ein Gemisch von $CO_2$ und $O_2$ im Volumenverhältnis im Bereich von $5 \cdot 10^5:1$ bis $500:1$, vorzugsweise von $5000:1$, verwendet wird.

8. Verfahren nach Anspruch 1, dadurch gekennzeichnet, dass als oxidierend wirkende Gasatmosphäre ein Gemisch von $CO_2$ und Inertgas, beispielsweise ein Edelgas oder Stickstoff, im Volumenverhältnis im Bereich von $1:10^4$ bis $1:10$, vorzugsweise von $1:100$, verwendet wird.

9. Verfahren nach Anspruch 1, dadurch gekennzeichnet, dass Presslinge mit $UO_2$-Ausgangspulver verwendet werden, dessen spezifische Oberfläche im Bereich von $3$ m²/g bis $50$ m²/g liegt.

10. Verfahren nach Anspruch 9, dadurch gekennzeichnet, dass Presslinge verwendet werden mit $UO_2$-Ausgangspulver, dessen spezifische Oberfläche im Bereich von $4$ m²/g bis $7$ m²/g liegt.

11. Verfahren nach einem der Ansprüche 9 oder 10, dadurch gekennzeichnet, dass Presslinge verwendet werden mit $UO_2$-Ausgangspulver, dessen mittlere Kristallitgrösse kleiner als $0,5$ µm ist.

12. Verfahren nach Anspruch 11, dadurch gekennzeichnet, dass Presslinge verwendet werden mit $UO_2$-Ausgangspulver, dessen mittlere Kristallitgrösse im Bereich von $0,2$ bis $0,01$ µm liegt.


## Claims

1. A method of manufacturing sintered oxidic nuclear fuel bodies by the heat treatment of pressed bodies from $UO_2$ starting powder or from a starting powder of a mixture of $UO_2$ and $PuO_2$, at a temperature in the range of from 1,000 to 1,400° C, first in an oxidising and then in a reducing gas atmosphere, characterised in that the oxygen potential of the oxidising gas atmosphere is kept in a range such that a $U_4O_9$- or $(U, Pu)_4O_9$-crystal phase which can be detected crystallographically is produced in the pressed bodies during the heating to the temperature of treatment in this oxidising gas atmosphere.

2. A method as claimed in Claim 1, characterised in that, during the heating to the temperature of treatment, the pressed bodies are maintained at a temperature in the range of from 400 to 600° C for from 15 min to 2 h in the oxidising gas atmosphere.

3. A method as claimed in Claim 1, characterised in that pressed bodies are used which contain an additional substance which thermally decomposes at a temperature in the range up to the treatment temperature, thus forming decomposition products which have a reducing effect.

4. A method as claimed in Claim 3, characterised in that pressed bodies are used which contain molybdenum sulphide, zinc stearate, polyvinyl alcohol and/or hydrocarbons, as additional substance.

5. A method as claimed in Claim 3, characterised in that pressed bodies are used which contain the additional substance only in a layer on the surface.

6. A method as claimed in Claim 1, characterised in that a mixture of $CO_2$ and air in a volume ratio in the range of from $10^5:1$ to $10^2:1$, preferably $10^3:1$, is used as the oxidising gas atmosphere.

7. A method as claimed in Claim 1, characterised in that a mixture of $CO_2$ and $O_2$ in a volume ratio in the range of from $5 \cdot 10^5:1$ to $500:1$, preferably $5,000:1$, is used as the oxidising gas atmosphere.

8. A method as claimed in Claim 1, characterised in that a mixture of $CO_2$ and an inert gas, for example, a rare gas or nitrogen, in a volume ratio in the range of from $1:10^4$ to $1:10$, preferably $1:100$, is used as the oxidising gas atmosphere.

9. A method as claimed in Claim 1, characterised in that pressed bodies are used which contain $UO_2$-starting powder, the specific surface area of which lies in the range of from $3$ m²/g to $50$ m²/g.

10. A method as claimed in Claim 9, characterised in that pressed bodies are used with $UO_2$-starting powder, the specific surface area of which lies in the range of from $4$ m²/g to $7$ m²/g.

11. A method as claimed in Claim 9 or 10, characterised in that pressed bodies are used with $UO_2$-starting powder, the mean crystallite size of which is smaller than $0.5$ µm.

12. A method as claimed in Claim 1, characterised in that pressed bodies are used with $UO_2$-starting powder, the mean crystallite size of which lies in the range of from $0.2$ to $0.01$ µm.


## Revendications

1. Procédé de préparation de corps frittés oxydés en matières combustibles nucléaires, par un traitement thermique, à une température de traitement dans la plage de 1000 à 1400° C, d'abord en atmosphère gazeuse oxydante et, ensuite, en atmosphère gazeuse réductrice, de briquettes obtenues à partir de poudres de départ en $UO_2$ ou d'un mélange de poudres de départ en $UO_2$- et en $PuO_2$-, caractérisé en ce qu'il consiste à maintenir le potentiel d'oxygène de l'atmosphère gazeuse oxydante dans la plage dans laquelle il se produit une phase cristalline $U_4O_9$- ou $(U, Pu)_4O_9$ détectable par voie cristallographique dans les briquettes pendant le réchauffement jusqu'à la température de traitement dans cette atmosphère gazeuse oxydante.

2. Procédé suivant la revendication 1, caractérisé en ce qu'il consiste à maintenir, pendant le réchauffement jusqu'à la température de traitement, les briquettes dans la plage de 400 à 600° C pendant 15 min à 2 h dans l'atmosphère gazeuse oxydante.

3. Procédé suivant la revendication 1, caractérisé en ce qu'il consiste à utiliser des briquettes qui contiennent un additif qui se décompose thermiquement à une température allant jusqu'à la température de traitement, avec formation de produits de décomposition réducteurs.

4. Procédé suivant la revendication 3, caractérisé en ce qu'il consiste à utiliser des briquettes qui contiennent comme additifs du sulfure de molybdène, du stéarate de zinc, de l'alcool polyvinylique et/ou des hydrocarbures.

5. Procédé suivant la revendication 3, caractérisé en ce qu'il consiste à utiliser des briquettes qui ne contiennent l'additif qu'en une couche à la surface.

6. Procédé suivant la revendication 1, caractérisé en ce qu'il consiste à utiliser, comme atmosphère gazeuse oxydante, un mélange de $CO_2$ et d'air dans le rapport volumique compris entre $10^5:1$ et $10^2:2$, et de préférence de $10^3:1$.

7. Procédé suivant la revendication 1, caractérisé en ce qu'il consiste à utiliser, comme atmosphère gazeuse oxydante, un mélange de $CO_2$ et de $O_2$ en le rapport volumique allant de $5 \cdot 10^5:1$ à 500:1, et de préférence de 5000:1.

8. Procédé suivant la revendication 1, caractérisé en ce qu'il consiste à utiliser, comme atmosphère gazeuse oxydante, un mélange de $CO_2$ et de gaz inerte, par exemple d'un gaz rare ou d'azote, dans le rapport volumique compris entre $1:10^4$ et $1:10$, et de préférence de $1:100$.

9. Procédé suivant la revendication 1, caractérisé en ce qu'il consiste à utiliser des briquettes à poudres de départ en $UO_2$, dont la surface spécifique est comprise entre $3 \, m^2/g$ et $50 \, m^2/g$.

10. Procédé suivant la revendication 9, caractérisé en ce qu'il consiste à utiliser des briquettes à poudres de départ en $UO_2$, dont la surface spécifique est comprise entre $4 \, m^2/g$ et $7 \, m^2/g$.

11. Procédé suivant l'une des revendications 9 ou 10, caractérisé en ce qu'il consiste à utiliser des briquettes à poudres de départ en $UO_2$, dont la dimension moyenne de cristallite est inférieure à $0,5 \, \mu m$.

12. Procédé suivant la revendication 11, caractérisé en ce qu'il consiste à utiliser des briquettes à poudres de départ en $UO_2$, dont la dimension moyenne de cristallite est comprise entre 0,2 et $0,01 \, \mu$.